(19) Europäisches Patentamt
European Patent Office
Office européen des brevets

(11) **EP 2 107 812 A1**

(12) **EUROPEAN PATENT APPLICATION**

(43) Date of publication:
**07.10.2009 Bulletin 2009/41**

(51) Int Cl.:
**H04N 7/26** (2006.01)

(21) Application number: **08300171.9**

(22) Date of filing: **03.04.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **STMicroelectronics (Grenoble) SAS 38000 Grenoble (FR)**

(72) Inventors:
• **Ries, Gilles**
  **38430, SAINT JEAN DE MOIRANS (FR)**
• **Sun, Tan**
  **201300, SHANGAÏ (CN)**

(74) Representative: **de Beaumont, Michel**
  **Cabinet Beaumont**
  **1, rue Champollion**
  **38000 Grenoble (FR)**

(54) **Compression/decompression of digital images**

(57) The invention concerns a method of compressing at least a part of a digital image comprising the steps of: dividing said digital image into groups of pixels; assigning a first information (C0', C2', C1') to each group of pixels wherein said first information indicates at least two reference colours (C0, C1) selected for said group of pixels and, for each pixel in said group of pixels, which reference colour or combination thereof is selected; assigning a second information (30) to each group of pixels indicating a mode of compression used for said group of pixels; said first information indicating at least a third colour (C2) for at least one of said groups of pixels. The invention also concerns a corresponding decompressing method and data file.

Fig 10

**Description**

<u>Field</u>

The present invention relates to compression and decompression of digitized images, particularly for information relating to colour.

<u>Background</u>

Compared to other forms of digital information, digitized images may occupy very large amounts of storage capacity. For situations where information for a large number of images must be transferred from one piece of equipment to another, located in a different place, the cost involved could become prohibitive. Therefore, in such situations, techniques for reducing the volume of the information actually stored and transferred are employed.

A solution is to reduce the number of bits used for the representation of colour, thus reducing the overall the file size of image data relating to each image, compared to the file size of the initial data. Various methods exist for this.

Fig 1a represents a general process of compression which consists of dividing the initial image data **IID**, which is constructed of a number of pixels, each pixel containing information for colour in RGB888 format into samples. It also consists of performing operations on the data in each sample and producing compressed image data **CID** in RGB565 format. This compressed image data **CID** may be then stored in a suitable form and transferred to other equipment.

RGB888 indicates that each pixel contains 8 bits for each of red (R), green (G) and blue (B) colour components. Similarly, RGB565 indicates that red and blue have 5 bits each and green has 6 bits allocated to it.

Fig 1b represents a general process of decompression which occurs at some time after the compression process, whereby operations are performed on compressed image data **CID** to produce final image data **FID**.

The various methods for compressing a file of digital image data differ in the size and form of the groups of pixels and in the nature of the operations performed on the data therein. One suite of methods is known as S3TC and is described in US patent 5,956,431.

Fig 2 represents a process according to S3TC, whereby image data is compressed by reducing the amount of information representing colour and changing the way this information is stored. Initial image data **IID** is divided into groups of 4 x 4 pixels **10** for purposes of processing.

Firstly, for each group in turn, a process of colour selection **11** defines two reference colours, based on the colours present in the group of pixels **10** being processed. More detail on the selection of the reference colours will be given later. An encoding process **12** is then performed that results in a 64 bit word **13** for the sample of pixels. The 64 bit word **13** contains 32 bits **14** representing the 2 reference colours in RGB565 and 32 bits containing a look-up table **15** of 4 x 4 cells which uses 2 bits per cell to indicate which of one of 4 possible colours shall be applied to each pixel during decompression.

The four colours are composed of the two reference colours and two interpolated colours which will be generated from the reference colours, according to predefined relationships, during decompression.

In the example of the well known S3TC technique, as discussed in US patent 5,956,431, the reference colours are chosen by mathematical process which calculates averages for the numerical values of the colour components for the group as a whole and then establishes a 'centre of gravity' from these. A line of numerical values passing through this centre of gravity is then chosen so that the 'moment of inertia' (a mean square of the differences between actual values and values on the line) is a minimum. The reference colours are then chosen from colours along this line so as to minimize the errors between original colour values on one hand and the reference and resultant interpolated colours on the other.

S3TC contains a number of variants, where the amount and type of information stored for the reference colours is varied. The first variant, which has two modes, will be discussed here.

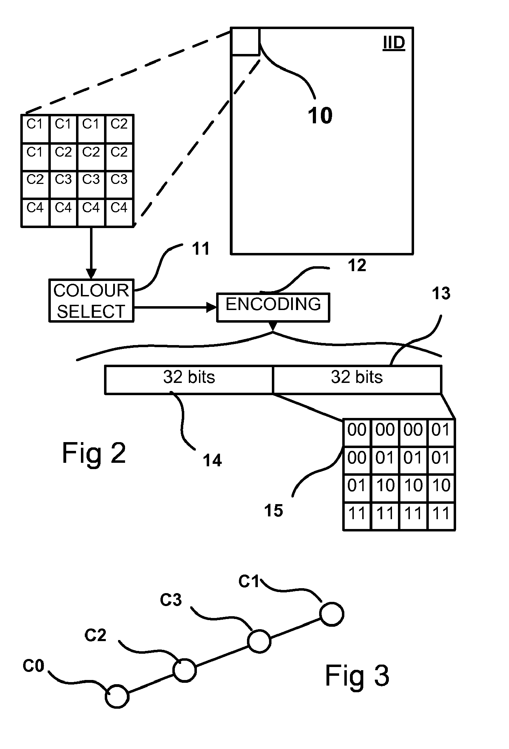

Fig 3 represents the relationship of the reference and interpolated colours produced in a first mode. Two reference colours, **C0** and **C1**, are selected as above. Reference colours **C0** and **C1** form the extremities of a line in colour space. During decompression, two interpolated colours, **C2** and **C3**, are generated during decompression where:

$$C2 = \frac{2}{3}C0 + \frac{1}{3}C1,$$

and

$$C3 = \frac{2}{3}C1 + \frac{1}{3}C0 .$$

Colours C2 and C3 lie on the line between C0 and C1.
In a second mode, only one interpolated colour is generated during decompression as:

$$C2 = \frac{1}{2}C1 + \frac{1}{2}C0 ,$$

and C3 is considered to be transparent.

The choice of mode is indicated by the order in which the reference colours are stored in the compressed image data CID. When the first mode is used, **C0** is set numerically greater than **C1** and decompression is performed on the basis that there should be two reference colours and two interpolated colours. Where **C0** is numerically smaller than **C1,** the second mode has been used and decompression will be performed on that basis.

A group of pixels in the initial image data occupied 16 x 24 bits in RGB888 whereas the equivalent group in the compressed image data occupies 64 bits. Thus the compression factor is said to be 6:1.

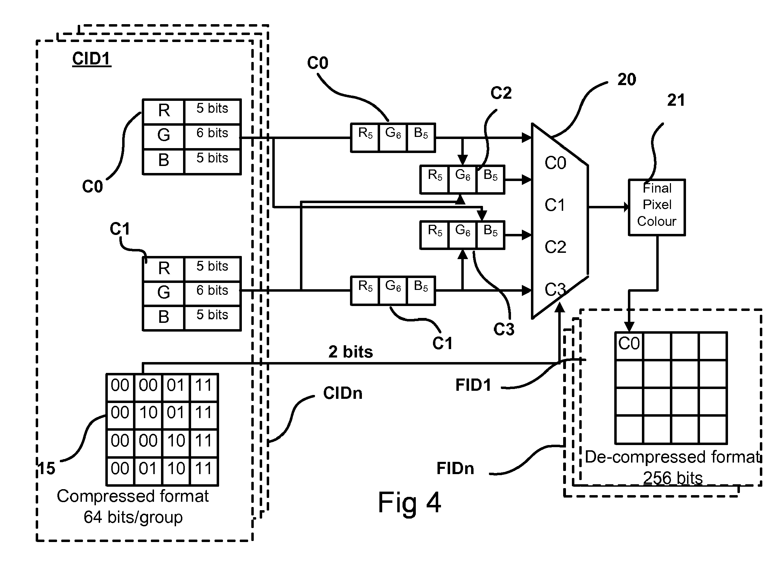

Fig 4 represents the decompression process whereby the final image data **FID** is reconstituted in order to enable display. Compressed image data words **CID1-CIDn** are provided for n groups of pixels. Each word contains sixteen bits each for two reference colours, **C0** and **C1** and thirty-two bits for a look-up table of colour **15** selection per pixel for each of the sixteen pixels.

The two interpolated colours, **C2, C3** are derived from the two reference colours by adding the two reference colours values in proportions defined by the mode of compression used. The four colours, **C0** to **C3**, are presented to a selector **20**. For each pixel, the look-up table **15** is consulted and one of the four colours, **C0 - C3,** is selected as the final colour for the pixel in question. Groups of de-compressed pixels **FID1-FIDn** are thus produced and assembled into final image data **FID** for display as an image.

There are other mathematical techniques for the selection of the reference colours and other techniques for the generation of the colours used in the final image data.

In general the technique described above and other existing techniques achieve acceptable results for most groups of pixels for most images, where the range of numerical values for the individual colour components and range of the sums of the colour components is small i.e. there is a small gradient between two dominant colours.

However in certain cases, they are unable to produce groups sufficiently close to the original and errors are visible in the final image.

When all component values are zero, the resultant colour is black and when all component values are at their maxima, white is the result. When the three components are at intermediate but near equal values, the resultant colour is grey. 'Coloured' pixels are those where one component is at a substantially higher value than the other two.

One simple example of such a case occurs where many of the pixels are very close to black and many very close to white but a small number of pixels are coloured. The centre of gravity will be on a line between black and white i.e. grey. Furthermore, the line of minimum moment of inertia will pass between near black and near white and so the interpolated colours will not contain a significant predominance of one of the colour components i.e. they will be close to grey. When the image is decompressed, it will seem as if the minority 'coloured' pixels have been 'lost'.

In general, where there are high gradients of numerical value, such as the contours around objects in the image, existing methods of compression may produce artifacts which degrade the final image, for example changing the way the contour appears.

Furthermore, where there are four or more distinct colours present, the averaging process will 'lose' information in a way that may degrade unacceptably the final image.

If present in sufficient numbers, depending on the resolution of the displayed image, the degradation of the displayed image by these errors will be unacceptable.

<u>Summary</u>

It is an aim of embodiment of the present invention to at least partially address one or more of the previously described needs.

According to an aspect, there is provided a file containing a representation of at least part of a compressed digital image produced from a first image divided into groups of pixels containing:

- for at least one of said groups of pixels, information for two reference colours and
- for at least one of said groups of pixels, information for two reference colours and for at least a third colour obtained by selection based on the colours present in the first image.

According to an embodiment, said third colour has a variable value based on colours found in the corresponding group of pixels in the first image.

It is also provided a file containing a representation of at least part of a decompressed digital image, divided into groups of pixels, produced from a file containing a compressed digital image, wherein colours are assigned to each pixel in a group of pixels from a palette of colours which is established for that group of pixels according to an information indicating a mode of decompression for each group of pixels in the file containing the compressed digital image.

According to an embodiment, for at least one group of pixels in the file containing the decompressed digital image, said palette of colours comprises at least three colours that are present in the information in the file containing the compressed digital image for the corresponding group of pixels.

According to another embodiment, for at least one group of pixels in the file containing the decompressed digital image, said palette of colours comprises at least eight colours.

According to an embodiment, a first half of said group of pixels contain colours selected from a first half of said palette of colours and a second half of said group of pixels contain colours selected from a second half of said palette of colours.

It is also provided a method of compressing at least a part of a digital image comprising the steps of:

- dividing said digital image into groups of pixels;
- assigning a first information to each group of pixels wherein said first information indicates at least two reference colours selected for said group of pixels and, for each pixel in said group of pixels, which reference colour or combination thereof is selected;
- assigning a second information to each group of pixels indicating a mode of compression used for said group of pixels;

said first information indicating at least a third colour for at least one of said groups of pixels.

According to an embodiment, the colour assigned to each pixel is selected from a palette of four colours, of which a set of three colours of the palette are present in said information in the compressed format and the fourth colour of the palette is generated by a combination of two colours of the set of three colours.

According to another embodiment, wherein the colour assigned to each pixel is selected from a palette of eight colours, of which two colours are present in said information present in the compressed format and a first set of three of the colours are generated by combinations of a first pair of the three colours present in the information in the compressed format and a second set of three of the colours are generated by combinations of a second pair of the three colours present in the information in the compressed format.

According to an embodiment, a first half of the group of pixels have colours assigned from a first half of the palette and a second half of the group of pixels have colours assigned from a second half of the palette.

It is also provided a method of decompressing at least part of a representation of a digital image in a compressed format, comprising the step of, for each group of pixels, assigning a colour to each pixel generated from information for a corresponding group of pixels present in the compressed format wherein for at least one group of pixels, the colour assigned to each pixel in the uncompressed format is generated from information in the compressed format which contains at least three colours.

Brief description of the drawings

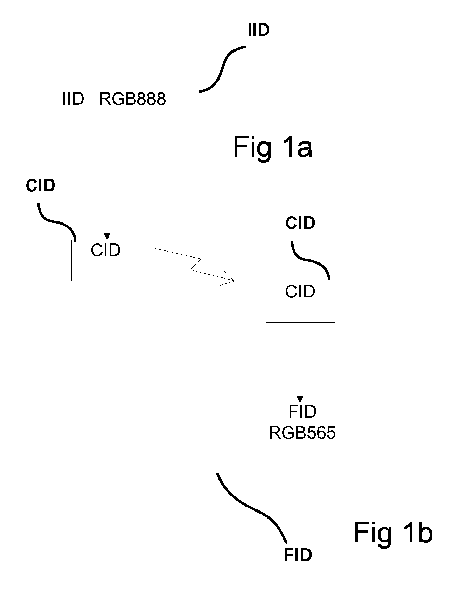

Fig 1 already described represents a simplified process where a digital image is compressed to a compressed format and then decompressed into a final format.
Fig 2 already described represents a process of compression of a digital image according to known technique.
Fig 3 already described represents a relationship of colours retained for use in a decompression process according to a known technique.
Fig 4 already described represents a process of decompression of a digital image according to known technique.

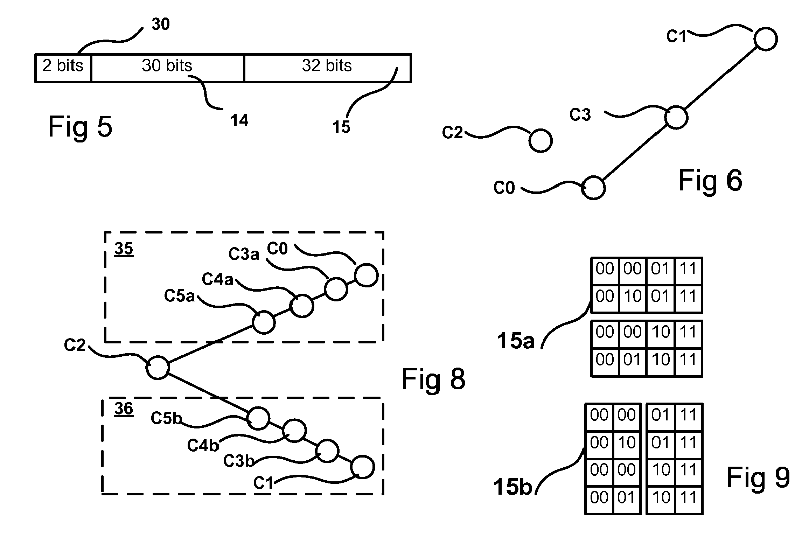

Fig 5 represents an embodiment of a structure of a data word for part of compressed digital image.
Fig 6 represents a relationship of colours retained for use in a mode of an embodiment of decompression process.

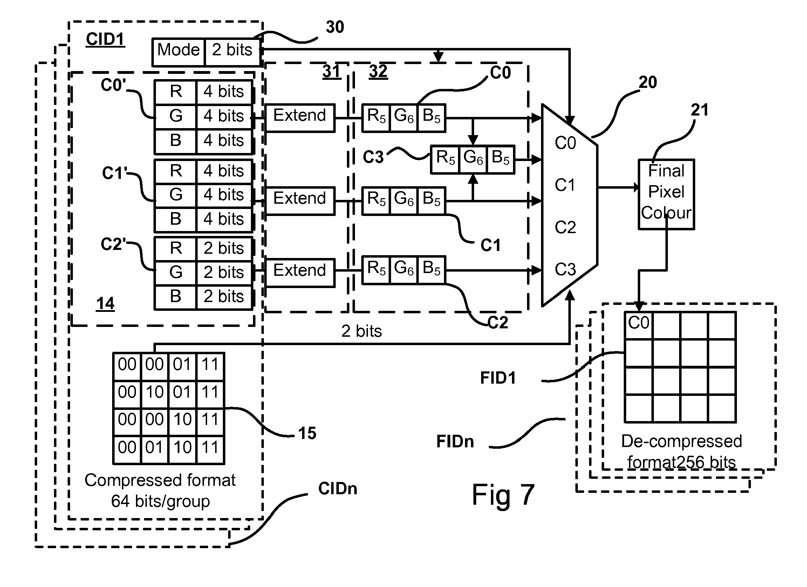

Fig 7 represents an embodiment of a process of decompression of a digital image.

Fig 8 represents a relationship of colours retained for use in another mode of an embodiment of a decompression process.

Fig 9 represents a look-up table for use in the mode decompression process referred to in Fig 8.

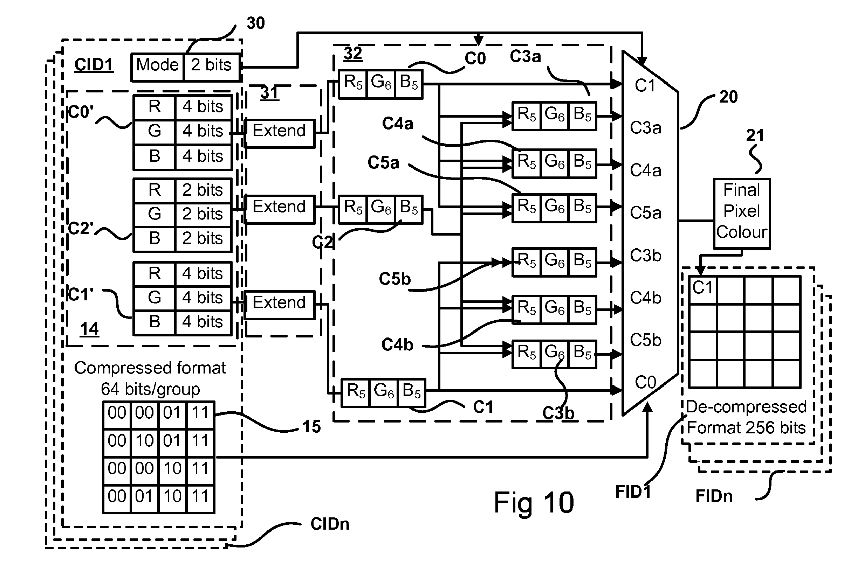

Fig 10 represents a process of decompression of a digital image for the mode referred to in Figs 8 and 9.

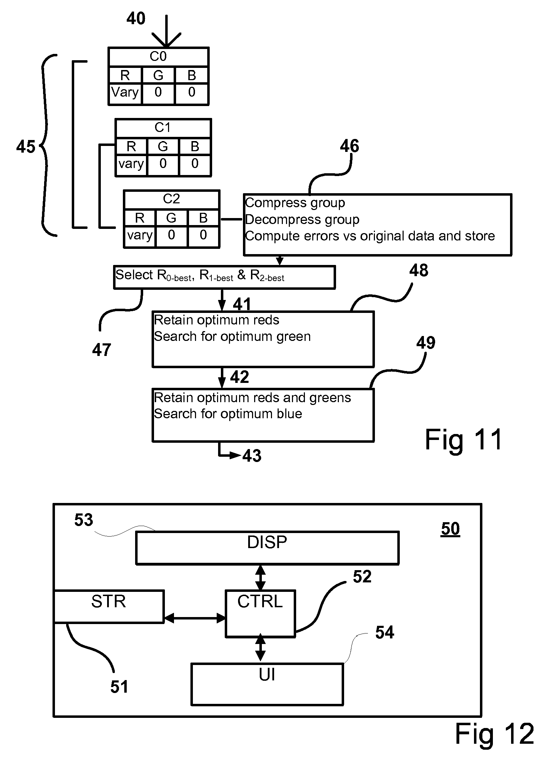

Fig 11 represents an exemplary method of selection of colours retained for use in a process of decompression.

Fig 12 represents an embodiment of an electronic equipment.

Detailed description

Fig 5 represents an exemplary structure for the word of data for a group of pixels. A look-up table **15** is composed of thirty-two bits. Thirty bits **14** are reserved for the storage of the colour information and are henceforth referred to as 'reference colour bits' and two bits 30 are used for selecting a mode of compression-decompression.

There is provided a first mode, (henceforth 'standard mode') of an embodiment of compression-decompression. Two reference colours, **C0** and **C1**, are stored. However, as compared to S3TC, reference colours **C0** and **C1** are here stored in RGB555 instead of RGB565. Two interpolated colours, **C2** and **C3**, are derived from these reference colours according to the following relationships:

$$C2 = \frac{5}{8}C0 + \frac{3}{8}C1 \, ,$$

and

$$C3 = \frac{3}{8}C0 + \frac{5}{8}C1 \, .$$

Fig 6 represents the relationship of the reference and interpolated colours for a second mode (henceforth 'mode 2') of an embodiment of the compression-decompression. Three reference colours, **C0**, **C1** and **C2** are selected and one interpolated colour **C3** is defined according to the relationship:

$$C3 = \frac{1}{2}C1 + \frac{1}{2}C0 \, .$$

The three reference colours, **C0**, **C1** and **C2** are selected by a suitable mathematical method designed to minimize the errors between original and final versions of the group of pixels in question. Reference colour **C2** may therefore be selected independently of the selection of reference colours **C0** and **C1** and does not have to have any particular relationship to them.

In contrast to the techniques described previously, one of the colours in the final image is not an interpolated colour but a third reference colour which is not simply a mixture of the other two reference colours. This allows a colour present in a minority of pixels which is significantly far from the line of minimum 'moment of inertia' to be preserved.

Fig 7 represents an embodiment of the process of decompression of compressed image data. Firstly two mode selection bits **30** are used to indicate the mode of compression used and hence the mode of decompression required. Reference colour bits **14** contain information for three reference colours, **C0**' and **C1**' in RGB444 format and **C2**' in RGB222 format.

The data for **C0**', **C1**' and **C2**' are passed to an extension process **31** which produces reference colours **C0**, **C1** and **C2** by converting them to RGB555 format. The mode selection bits **30** are presented to the process of interpolation **32** and the selector **20**. The interpolation process **32** generates the interpolated colour **C3** from reference colours **C0** and **C1**.

The four colours, **C0** - **C3**, are presented to a selector **20**. For each pixel, the look-up table **15** is consulted and one of the four colours, **C0** - **C3,** is selected as the final colour **21** for the pixel in question. The groups of de-compressed pixels **FID1-FIDn** are thus produced and assembled into final image data **FID** for display as an image.

Fig 8 represents the relationship of the reference and interpolated colours for a further mode, (henceforth 'mode 3') of an embodiment of compression-decompression. This mode comprises two submodes.

Three reference colours, **C0**, **C1** and **C2** are selected.

A first set of interpolated colours, **C3a, C4a** and **C5a,** will be derived from reference colours **C0** and **C2** according the following relationships:

$$C3a = \frac{1}{8}C2 + \frac{7}{8}C0 \, ,$$

$$C4a = \frac{2}{8}C2 + \frac{6}{8}C0 \, ,$$

and

$$C5a = \frac{3}{8}C2 + \frac{5}{8}C0 \, .$$

And a second set of interpolated colours, **C3b, C4b** and **C5b,** will be derived from reference colours **C1** and **C2** as follows:

$$C3b = \frac{1}{8}C2 + \frac{7}{8}C1 \, ,$$

$$C4b = \frac{2}{8}C2 + \frac{6}{8}C1 \, ,$$

and

$$C5b = \frac{3}{8}C2 + \frac{5}{8}C1 \, .$$

Fig 9 represents the way that the look-up table is used in the case of this pair of submodes. In a first submode, the look-up table **15a** is divided into top and bottom halves, each representing a matrix of 2 x 4 pixels. The top half has colours assigned from amongst a first set of colours **35** and the bottom half has colours assigned from a second set of colours **36.** The interpretation of the look-up table **15a** can be summarized as follows:

|  | Look-up cell value | Colour applied |
|---|---|---|
| **Top half** | 0 | C0 |
|  | 1 | C3a |
|  | 2 | C4a |
|  | 3 | C5a |
| **Bottom half** | 0 | C1 |
|  | 1 | C3b |
|  | 2 | C4b |
|  | 3 | C5b |

In a second submode, the look-up table **15b** is divided into left and right halves, again each representing a matrix of 2 x 4 pixels and having colours assigned from sets of colours **35** and **36** respectively. The interpretation of the look-up table **15b** can be summarized as follows:

|  | Look-up cell value | Colour applied |
|---|---|---|
| **left half** | 0 | C0 |
|  | 1 | C3a |
|  | 2 | C4a |
|  | 3 | C5a |
| **right half** | 0 | C1 |
|  | 1 | C3b |
|  | 2 | C4b |
|  | 3 | C5b |

Fig 10 represents the process of decompression of compressed image data according to the embodiment discussed in relation to figures 8 and 9. Firstly mode selection bits **30** are presented to the interpolation process **32** and the selector **20**.

Reference colours bits **14** contain information for three reference colours, **C0'** and **C1'** in RGB444 format and **C2'** in RGB222 format. Thirty-two bits are used as before for a look-up table **15**.

The data for **C0'**, **C1'** and **C2'** are passed to an extension process **31** which converts them to RGB555 format. The interpolated process **32** derives interpolated colours **C3a - C5a** from reference colours **C0** and **C2** and interpolated colours **C3b - C5b** from reference colours **C1** and **C2**.

The eight colours, **C0, C1, C3a - C5a** and **C3b - C5b,** are presented to the selector **20**. For each pixel, the look-up table **15** and the mode selection bits **30** are consulted and one of the eight colours is selected as the final colour **21** for the pixel in question. The groups of de-compressed pixels **FID1-FIDn** are thus produced and assembled into final image data **FID** for display as an image.

In contrast to the modes discussed previously, the third reference colour **C2** is not actually present in the final image data for a group compressed and decompressed with one of the two submodes of modes 3.

As one skilled in the art will appreciate, this pair of modes may be used advantageously for groups containing more than three significantly different colours.

As will be easily appreciated by one skilled in the art, it is possible to use different modes for different groups of pixels coming from the same file of initial image data. Various methods of implementing this are possible.

A method could be, during the compression process, to decompress a group that has been just compressed and compare the initial image date to the final image data that would result. The errors observed between the initial and final image data could be compared to predetermined criteria in order to choose the mode of compression-decompression to be used for that group.

An advantageous sequence could be to compress the group using the 'standard' mode. The group is then decompressed and an evaluation of the errors is performed. If the level of errors is too high, then the mode 2 is tried. If the level of errors is still too high, then one of the submodes of mode 3 is tried. If the level of errors is still too high, then the remaining submode of mode 3 is used.

In all of the above modes, the compression factor for initial image data in RGB888 is 6:1. However, as one of ordinary skill will appreciate, the standard mode retains the greatest precision of colour because these are encoded in RGB555 in the compressed format, as opposed to RGB444 or RGB222. Therefore, for groups with low gradients of colour and only two dominant colours, this mode will give the greatest fidelity to the original image. Hence it is proposed that this mode be used as standard and tried before modes 2 and 3.

Fig 11 represents an exemplary process for selecting the reference colours. Optimum values for each of the colour components of each reference and interpolated colour are searched for individually.

Preferably, the colour component presenting the greatest degree of variation of numerical value in the group of pixels in question is identified. Then the colour component presenting the smallest degree of variation is identified. For this example, it is assumed that the decreasing order of degree of variation of numerical value is red, green and then blue.

At a starting point **40**, the optimum value for the red component of the three reference colours for a group of pixels being processed will be searched for. The values for the green and blue components for the three reference colours, CO-C2, are set to zero.

The values of the red component for each of the three reference colours are varied from 0 to its maximum value in a three level nested loop (bloc 45). In other words, in the example herewith, all of the possible values of the red component for C2 will be tried for each value of the red component for C1 and this process will be repeated for all of the values of the red component for C0. This means that all of the possible combinations of values for the three components will be tried. For each combination of values, the data for a group of pixels of initial image data is compressed (bloc 46) using one of the modes described above, calculating whatever interpolated colours are needed. The same group is then decompressed (bloc 46) and the errors between initial and final image data computed and stored (bloc 46).

This process is repeated until the full range of values for the red components has been tried. The set of three values ($R_0$-best, $R_1$-best, $R_2$-best) that gives the lowest level of errors is then selected (bloc 47) and these are retained as the optimum value for the three reference colours **C0**, **C1** and **C2**.

The process has now reached point **41**.

Retaining the optimum values for the red component for the three colours, **C0-C2**, the optimum values for the green component for the four colours are sought in a similar manner (bloc 48) and point **42** is reached.

Retaining the optimum values for red and green components for the three colours **C0-C2**, the optimum values for the blue component are sought for the three colours in turn again in a similar manner (bloc 49) and point **43** is reached.

The overall process is repeated for each group of pixels of the image.

Many search algorithms are available and one of ordinary skill will be able to choose and optimize an algorithm for performing the search for the optimum value of an individual colour component.

It is possible to use other mathematical methods for determining the reference colours and one of ordinary skill will be able to make this choice. This choice is a compromise between the processing power of the equipment performing the correction, the amount of data to compress, the time allowed and the quality of the result desired. The use of another mathematical method of determining the reference colours does not impose any particular constraints on the use of any of the modes of compression-decompression provided according to embodiments of the invention.

Fig 12 represents a mobile equipment **50** incorporating circuitry able to perform decompression of compressed image data according to an embodiment of the invention. There is provided a storage means **51** (STR) which may be a permanent part of the equipment or a removable storage means. The storage means **51** could be in the form of memory, either volatile or non-volatile, an optical disk or magnetic storage media. In the storage means **51** is stored one or more images in the form of compressed image data according to embodiments of the invention. A control device **52** (CTRL) is able to decompress the compressed image data according into final image data format for display on a display device **53** (DISP). The user may control the equipment by using a user interface means **54** (UI).

## Claims

1. A file containing a representation of at least part of a compressed digital image produced from a first image divided into groups of pixels containing:

   - for at least a first of said groups of pixels, information (C0, C1) for two reference colours (C0, C1), and
   - for at least a second of said groups of pixels, information (CO', C1', C2') for said two reference colours and for at least a third colour (C2) obtained by selection based on the colours present in the first image.

2. A file according to claim 1 wherein said third colour (C2) has a variable value based on colours found in the corresponding group of pixels in the first image.

3. A file containing a representation of at least part of a decompressed digital image, divided into groups of pixels, produced from a file containing a compressed digital image according to claims 1 or 2, wherein colours are assigned to each pixel in a group of pixels from a palette of colours (C0, C1, C2, C3; C1, C3a, C4a, C5a, C3b, C4b, C5b, C0) which is established for that group of pixels according to an information (30) indicating a mode of decompression for each group of pixels in the file containing the compressed digital image.

4. A file according to claim 3 wherein, for at least one group of pixels in the file containing the decompressed digital image, said palette of colours comprises at least three colours (C0, C1, C2) that are present in the information (CO', C1', C2') in the file containing the compressed digital image for the corresponding group of pixels.

5. A file according to claim 3 wherein, for at least one group of pixels in the file containing the decompressed digital image, said palette of colours comprises at least eight colours (C1, C3a, C4a, C5a, C3b, C4b, C5b, C0).

6. A file according to claim 5 wherein a first half of said group of pixels contain colours (C1, C3a, C4a, C5a) selected from a first half of said palette of colours and a second half of said group of pixels contain colours (C3b, C4b, C5b, C0) selected from a second half of said palette of colours.

7. A method of compressing at least a part of a digital image comprising the steps of:

   - dividing said digital image into groups of pixels;
   - assigning a first information (CO', C2', C1') to each group of pixels wherein said first information indicates at least two reference colours (C0, C1) selected for said group of pixels and, for each pixel in said group of pixels, which reference colour or combination thereof is selected;
   - assigning a second information (30) to each group of pixels indicating a mode of compression used for said group of pixels;

   **characterised in that**, for at least one of said groups of pixels, said first information indicates at least a third colour (C2).

8. A method according to claim 7 wherein the colour assigned to each pixel is selected from a palette of four colours (C0, C1, C2, C3), of which a set of three colours (C0, C1, C2) of the palette are present in said information in the compressed format and the fourth colour (C3) of the palette is generated by a combination of two colours (C0, C1) of the set of three colours.

9. A method according to claim 7 wherein the colour assigned to each pixel is selected from a palette of eight colours (C1, C3a, C4a, C5a, C3b, C4b, C5b, C0), of which two colours (C0, C1) are present in said information (CO', C1' C2') present in the compressed format and a first set (C3a, C4a, C5a) of three of the colours are generated by combinations of a first pair (C1, C2) of the three colours present in said information in the compressed format and a second set (C3b, C4b, C5b) of three of the colours are generated by combinations of a second pair (C0, C2) of the three colours present in said information in the compressed format.

10. A method according to claim 9, wherein a first half of the group of pixels have colours (C1, C3a, C4a, C5a) assigned from a first half of the palette and a second half of the group of pixels have colours (C2, C3b, C4b, C5b) assigned from a second half of the palette.

11. A method of decompressing at least part of a representation of a digital image in a compressed format, comprising the step of, for each group of pixels, assigning a colour to each pixel generated from information (CO', C1' C2') for a corresponding group of pixels present in the compressed format wherein for at least one group of pixels, the colour assigned to each pixel in the uncompressed format is generated from information in the compressed format which contains at least three colours.

IID

IID   RGB888

Fig 1a

CID

CID

CID

CID

FID
RGB565

Fig 1b

FID

IID

10

| C1 | C1 | C1 | C2 |
|----|----|----|----|
| C1 | C2 | C2 | C2 |
| C2 | C3 | C3 | C3 |
| C4 | C4 | C4 | C4 |

11

12

13

COLOUR SELECT → ENCODING

| 32 bits | 32 bits |
|---------|---------|

14

Fig 2

15

| 00 | 00 | 00 | 01 |
|----|----|----|----|
| 00 | 01 | 01 | 01 |
| 01 | 10 | 10 | 10 |
| 11 | 11 | 11 | 11 |

C1

C3

C2

C0

Fig 3

Fig 4

EP 2 107 812 A1

Fig 5

| 2 bits | 30 bits | 32 bits |

30

14

15

Fig 6

C1

C3

C2

C0

Fig 8

35

C3a C0

C4a

C5a

C2

36

C5b

C4b

C3b

C1

Fig 9

15a

| 00 | 00 | 01 | 11 |
| 00 | 10 | 01 | 11 |

| 00 | 00 | 10 | 11 |
| 00 | 01 | 10 | 11 |

15b

| 00 | 00 | 01 | 11 |
| 00 | 10 | 01 | 11 |
| 00 | 00 | 10 | 11 |
| 00 | 01 | 10 | 11 |

Fig 7

Fig 10

**40**

| C0 | | |
|---|---|---|
| R | G | B |
| Vary | 0 | 0 |

**45**

| C1 | | |
|---|---|---|
| R | G | B |
| vary | 0 | 0 |

**46**

| C2 | | |
|---|---|---|
| R | G | B |
| vary | 0 | 0 |

Compress group
Decompress group
Compute errors vs original data and store

**48**

Select $R_{0\text{-best}}$, $R_{1\text{-best}}$ & $R_{2\text{-best}}$

**47**

**41**

Retain optimum reds
Search for optimum green

**49**

**42**

Retain optimum reds and greens
Search for optimum blue

**43**

## Fig 11

**53**

**50**

| DISP |
|---|

**52**

| STR | CTRL |
|---|---|

**51**

**54**

| UI |
|---|

## Fig 12

**European Patent Office**

**EUROPEAN SEARCH REPORT**

Application Number

EP 08 30 0171

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 285 458 B1 (YADA SHINICHI [JP]) 4 September 2001 (2001-09-04) * abstract * * column 7, line 16 - column 9, line 48 * * figures 1-4 * | 1-9,11 | INV. H04N7/26 |
| X | WO 2006/100593 A (ATI TECHNOLOGIES INC [CA]; ATI INT SRL [BB]; ALEKSIE MILIVOJE [CA]; MU) 28 September 2006 (2006-09-28) * abstract * * page 1, last paragraph * * page 2, last paragraph - page 3, line 6 * * page 15, last paragraph - page 17, paragraph 1 * * page 23, line 3 - page 24, paragraph 2 * | 1-8,11 | |
| X | US 5 644 406 A (HARRINGTON STEVEN J [US] ET AL) 1 July 1997 (1997-07-01) * abstract * * column 7, line 24 - column 8, line 53 * * column 12, line 17 - column 13, line 47 * | 1-7,11 | |
| | | | TECHNICAL FIELDS SEARCHED (IPC) |
| A | WO 2008/027413 A (ATI TECHNOLOGIES INC [CA]; IOURCHA KONSTANTINE [US]; POMIANOWSKI ANDRE) 6 March 2008 (2008-03-06) * abstract * * paragraph [0059] - paragraph [0066] * | 1-11 | H04N G06T |
| A | LEVKOVICH-MASLYUK L ET AL: "Texture compression with adaptive block partitions" PROCEEDINGS ACM MULTIMEDIA, XX, XX, 30 October 2000 (2000-10-30), pages 401-403, XP002468085 * the whole document * | 10 | |

-/--

The present search report has been drawn up for all claims

| Place of search | Date of completion of the search | Examiner |
|---|---|---|
| Berlin | 24 September 2008 | Kontopodis, D |

EPO FORM 1503 03.82 (P04C01)

**European Patent Office**

## EUROPEAN SEARCH REPORT

Application Number

EP 08 30 0171

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | IVANOV D ET AL: "COLOR DISTRIBUTION - A NEW APPROACH TO TEXTURE COMPRESSION" COMPUTER GRAPHICS FORUM, AMSTERDAM, NL, vol. 19, no. 3, 21 August 2000 (2000-08-21), pages C283-C289,C535, XP009008909 ISSN: 0167-7055 * abstract * section 3. | 1-11 | |

TECHNICAL FIELDS
SEARCHED (IPC)

The present search report has been drawn up for all claims

| Place of search | Date of completion of the search | Examiner |
|---|---|---|
| Berlin | 24 September 2008 | Kontopodis, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 30 0171

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2008

| Patent document cited in search report | | Publication date | Patent family member(s) | | Publication date |
|---|---|---|---|---|---|
| US 6285458 | B1 | 04-09-2001 | JP | 10051642 A | 20-02-1998 |
| WO 2006100593 | A | 28-09-2006 | EP | 1864255 A1 | 12-12-2007 |
| | | | US | 2006215914 A1 | 28-09-2006 |
| US 5644406 | A | 01-07-1997 | NONE | | |
| WO 2008027413 | A | 06-03-2008 | US | 2008055331 A1 | 06-03-2008 |

EPO FORM P0459

For more details about this annex : see Official Journal of the European Patent Office, No. 12/82

**EP 2 107 812 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   US 5956431 A